# EUROPÄISCHE PATENTSCHRIFT

(11) **EP 4 146 490 B1**
(45) Veröffentlichungstag und Bekanntmachung des Hinweises auf die Patenterteilung: **27.11.2024**
(21) Anmeldenummer: 21719090.9
(22) Anmeldetag: 12.04.2021
(51) Int. Cl.: B60K 35/29, B60K 35/22, B60K 35/81, H04L 51/21

(54) **VERFAHREN, COMPUTERPROGRAMM UND VORRICHTUNG ZUR WIEDERGABE VON BENACHRICHTIGUNGEN IN EINEM FAHRZEUG**
METHOD, COMPUTER PROGRAM AND APPARATUS FOR PLAYBACK OF MESSAGES IN A VEHICLE
PROCÉDÉ, PROGRAMME INFORMATIQUE ET APPAREIL DE REPRODUCTION DE MESSAGES DANS UN VÉHICULE

(30) Priorität: 05.05.2020 DE 102020205674
(43) Veröffentlichungstag der Anmeldung: 15.03.2023
(73) Patentinhaber: VOLKSWAGEN AKTIENGESELLSCHAFT, 38440 Wolfsburg (DE)
(72) Erfinder: STÄBLER, Mathias, 10585 Berlin (DE); SCHLOTT, Daniela, 10557 Berlin (DE)
(86) Internationale Anmeldenummer: PCT/EP2021/059453
(87) Internationale Veröffentlichungsnummer: WO 2021/223963

(56) Entgegenhaltungen:
- EP-A1- 2 787 427
- EP-A1- 3 363 673
- DE-T5- 112013 007 572
- DE-T5- 112014 007 048
- DE-T5- 112014 007 282
- US-A1- 2019 337 533

## Beschreibung

Die vorliegende Erfindung betrifft ein Verfahren zur Wiedergabe von Benachrichtigungen in einem Fahrzeug. Die vorliegende Erfindung betrifft weiterhin eine Vorrichtung zur Wiedergabe von Benachrichtigungen in einem Fahrzeug und Computerprogramm zur Ausführung des erfindungsgemäßen Verfahrens.

In Kraftfahrzeugen werden insbesondere an den Fahrer, aber auch an weitere Fahrzeuginsassen, verschiedenste Informationen ausgegeben. So weisen nahezu alle gegenwärtigen Kraftfahrzeuge ein Kombiinstrument oberhalb der Lenksäule auf, in der Fahrzeugparameter wie beispielsweise die Geschwindigkeit oder Drehzahl, der aktuellen Füllstand von Kraftstofftank oder Batterie, Kontroll- und Warnleuchten, z. B. für den Fahrtrichtungsanzeiger, Fernlicht, angezogene Feststellbremse, nicht angelegte Sicherheitsgurte oder Fehlfunktionen und Defekte wichtiger Fahrzeugkomponenten und weitere Informationen eines Bordcomputers angezeigt werden. Auch Umgebungsparameter wie z.B. die Außentemperatur können wiedergegeben werden.

Zusätzlich können diese oder auch andere Informationen auch auf einem Head-up-Display oder auf einem in der Mittelkonsole angeordneten Display angezeigt werden. Insbesondere Infotainmentsysteme, in denen Autoradio, Medienwiedergabe Navigationssystem, Telefon, Softwareanwendungen (sogenannte Apps) und gegebenenfalls weitere Funktionen in einer zentralen Bedieneinheit zusammengeführt sind, nutzen häufig ein in der Mittelkonsole angeordneten Display.

Neben den Displays und Kontrollleuchten sind häufig auch Ausgabemöglichkeiten für akustische Signale vorgesehen, beispielsweise für Warntöne oder Sprachausgaben. Weiterhin können auch haptische Rückmeldungen, beispielsweise mittels in Bedienelementen integrierten Piezosystemen, ausgegeben werden.

Hierbei können auch verschiedene Benachrichtigungen auf einem Display angezeigt oder per Sprachausgabe wiedergegeben werden. So beschreibt die US 2018/0336423 A1, mit einer Fahrzeugkamera ein Objekt im Fahrzeugumfeld zu erfassen und im Bezug darauf eine Nachricht auszugeben, beispielsweise durch Anzeige auf einem Head-up-Display oder eine Sprachausgabe. Hierbei werden auf der Basis maschineller Lernverfahren je nach Ereignistyp, wie einem unzureichenden Sicherheitsabstand, einer kurvenreichen Straße, der Blockierung einer Fahrspur durch ein Unfallfahrzeug oder dem Umspringen einer Verkehrsampel, und dem jeweiligen Gefährdungsgrad unterschiedliche Nachrichten ausgegeben. Wenn der Fahrer innerhalb einer definierten Zeitspanne nicht reagiert, kann eine Fahrzeugfunktion automatisch ausgelöst werden. Ähnliche Verfahren werden auch in der US 2009/0187343 A1 und der US 2018/0281788 A1 offenbart. Das Dokument EP3363673A1 offenbart eine Technik zur Verarbeitung in einem Fahrzeug anfallender Statussignale. Eine Steuerungseinheit ist dazu ausgebildet, den Zustand der Anzeigeeinheit in Reaktion auf das erfasste Statussignal zu ändern. Die Änderung des Zustands der Anzeigeeinheit kann von einer dem Statussignal zugeordneten Priorität oder der dem Statussignal zugeordneten Signalgruppe abhängen. Die den Statussignalen zugeordneten Prioritäten können in verschiedenen Phasen des Betriebs des Fahrzeugs verschieden sein. Die DE112014007048T5 offenbart eine Anzeige für den Fall, dass ein Ereignis auftritt. Bei eine Anordnung des Informationsanzeigebereich 34 kann in Übereinstimmung mit dem Typ des auftretenden Ereignisses geändert werden, oder eine Vielzahl von Informationsanzeigebereichen 34 können in Übereinstimmung mit den Ereignistypen bereitgestellt sein. Durch eine derartige Ausgestaltung kann das Ereignissymbol 31 selbst dann, wenn eine Vielzahl von Typen von Ereignissen zur gleichen Zeit auftreten, in dem Informationsanzeigebereich 34 in Übereinstimmung mit jedem Ereignistyp angezeigt werden. Eine Priorität kann darüber hinaus in Übereinstimmung mit dem Ereignistyp vergeben werden, und der Informationsanzeigebereich 34 für das Ereignis mit einer hohen Priorität kann zum Beispiel zwischen den Instrumenten 37 angeordnet sein, mit anderen Worten, im Zentrum der Kombinationsinstrument-Anzeigeeinheit 40, und der Informationsanzeigebereich 34 für das Ereignis mit einer geringen Priorität kann an einem Seitenende der Kombinationsinstrument-Anzeigeeinheit 40 angeordnet sein. Es ist dadurch möglich, die Sichtbarkeit des Ereignissymbols 31 für das Ereignis mit einer hohen Priorität zu erhöhen.

Die Druckschrift DE112014007282T5 offenbart ein Anzeigensteuergerät 20 umfassend einen Prioritätsreihenfolge-Speicher 27. Der Prioritätsreihenfolge-Speicher 27 speichert Prioritätsinformationen, welche den Zusammenhang anzeigt, zwischen den Typen und den Prioritäten der Informationen, die in den Anzeigebereichen 201 bis 205 angezeigt werden sollen. Zum Beispiel, die Priorität der Navigationsinformationen ist an erster Stelle gesetzt und die Prioritäten der verbleibenden Typen (Erste Warninformationen, zweite Warninformationen, Fahrzeuginformationen, und AV-Informationen) werden an zweiter Stelle gesetzt.

Es ist eine Aufgabe der Erfindung, ein Verfahren, ein Computerprogramm und eine Vorrichtung für eine verbesserte Wiedergabe von Benachrichtigungen in einem Fahrzeug zur Verfügung zu stellen.

Diese Aufgabe wird durch ein Verfahren mit den Merkmalen des Anspruchs 1, ein Computerprogramm mit den Merkmalen des Anspruchs 11 sowie durch eine Vorrichtung gemäß Anspruch 12 gelöst. Bevorzugte Ausgestaltungen der Erfindung sind Gegenstand der abhängigen Ansprüche.

Die Erfindung beruht auf der Erkenntnis, dass in einem Fahrzeug von einer Vielzahl verschiedener Funktionen, die als separate Hardware- oder Softwarekomponenten implementiert sind, Benachrichtigungen für den Fahrer generiert werden.

So kann beispielsweise ein Hinweis auf eine Gefahrensituation von einer Navigationsanwendung erzeugt und ausgegeben werden, ein Hinweis auf eine erforderliche Servicemaßnahme von einem zentralen Steuergerät generiert und ausgegeben werden, mit einer Benachrichtigung von einer Telefonanwendung auf einen eingehenden Anruf hingewiesen werden oder auch eine mit einem E-Mail- oder Messenger-Dienst oder von einem Nachrichtenportal empfangene Nachricht angezeigt werden. Diese Benachrichtigungen werden unabhängig voneinander erzeugt. Hierbei kann es vorkommen, dass verschiedenartige Benachrichtigungen nahezu gleichzeitig generiert und dem Fahrer zur Kenntnis gebracht werden sollen.

Bei dem erfindungsgemäßen Verfahren zur Wiedergabe von Benachrichtigungen in einem Fahrzeug werden Benachrichtigungen von mehreren Komponenten des Fahrzeugs empfangen. Bei mehreren gleichzeitig vorliegenden Benachrichtigungen werden diese Benachrichtigungen basierend auf einer jeweils zugeordneten Kategorie gegeneinander priorisiert. Die priorisierten Benachrichtigungen werden entsprechend ihrer jeweiligen Priorität wiedergegeben.

Dieses ermöglicht, die Wiedergabe für Benachrichtigungen, die von verschiedenen Komponenten des Fahrzeugs generiert werden, zentral so zu regulieren, dass Anzeigekonflikte oder eine Informationsüberflutung durch die gleichzeitige Anzeige von zu vielen Informationen vermieden werden. Auf diese Weise wird insbesondere eine Gefährdung durch eine Ablenkung von der Fahraufgabe oder durch das Übersehen einer sicherheitsrelevanten Benachrichtigung verhindert.

Hierbei werden Benachrichtigungen mit der höchsten Priorität unmittelbar wiedergegeben und Benachrichtigungen mit einer niedrigeren Priorität zwischengespeichert und zu einem späteren Zeitpunkt wiedergegeben.

Gemäß einer Ausführungsform der Erfindung wird bei gleichzeitigem Vorliegen von mehreren Benachrichtigungen der gleichen Kategorie vorzugsweise die zeitlich aktuellste Meldung zuerst wiedergegeben.

Gemäß einer weiteren Ausführungsform der Erfindung wird Benachrichtigungen einer Kategorie jeweils einer von mehreren möglichen Werten innerhalb eines Wertebereichs zugeordnet, wobei bei gleichzeitigem Vorliegen von mehreren Benachrichtigungen der gleichen Kategorie die Benachrichtigung mit einem maximalen oder minimalen Wert priorisiert und zuerst wiedergegeben wird.

Vorteilhafterweise sind für die Wiedergabe der Benachrichtigungen mehrere Wiedergabekanäle vorgesehen, wobei die mehreren Wiedergabekanäle ein oder mehrere visuelle Kanäle mittels einer oder mehrerer Displays und/oder LED-Lichterketten, ein oder mehrere akustische Kanäle mittels einer oder mehrerer Lautsprecher und/oder ein oder mehrere haptische Kanäle mittels einer oder mehrerer Aktoren umfassen.

Weiterhin wird vorteilhafterweise eine Benachrichtigung mit einer hohen Priorität auf mehreren Wiedergabekanälen gleichzeitig ausgegeben kann.

Ebenso kann es vorteilhafterweise vorgesehen werden, dass mehrere unterschiedliche Benachrichtigungen gleichzeitig auf mehreren unterschiedlichen Wiedergabekanälen ausgegeben werden.

Vorzugsweise wird eine Benachrichtigung einer Kategorie für eine Mindestanzeigedauer angezeigt, bevor diese durch eine Anzeige von einer weiteren Benachrichtigung ersetzt wird.

Ebenso wird vorteilhafterweise eine auf einem Display angezeigte Benachrichtigung einer Kategorie durch eine Anzeige von einer Benachrichtigung einer höheren Kategorie überlagert oder verdrängt wird.

Gemäß einer Ausführungsform der Erfindung werden die Benachrichtigungen von den mehreren Komponenten des Fahrzeugs an ein zentrales Steuergerät oder eine zentrale Softwarekomponente des Fahrzeugs gesendet, wobei das zentrale Steuergerät oder die zentrale Softwarekomponente die empfangenen Benachrichtigungen priorisiert.

Ein erfindungsgemäßes Computerprogramm enthält Instruktionen, die bei Ausführung durch einen Computer den Computer veranlasst, Benachrichtigungen von mehreren Komponenten des Fahrzeugs zu empfangen, bei mehreren gleichzeitig vorliegenden Benachrichtigungen diese Benachrichtigungen basierend auf einer jeweils zugeordneten Kategorie gegeneinander zu priorisieren und die priorisierten Benachrichtigungen entsprechend ihrer jeweiligen Priorität wiederzugeben.

Der Begriff Computer ist dabei breit zu verstehen. Insbesondere umfasst er auch Steuergeräte, Mikrocontroller, eingebettete Systeme und andere prozessorbasierte Datenverarbeitungsvorrichtungen. Das Computerprogramm kann beispielsweise für einen elektronischen Abruf bereitgestellt werden oder auf einem computerlesbaren Speichermedium gespeichert sein.

Eine erfindungsgemäße Vorrichtung zur Wiedergabe von Benachrichtigungen in einem Fahrzeug, umfasst
- einen Eingang zum Empfangen von Benachrichtigungen von mehreren Komponenten des Fahrzeugs;
- eine Priorisierungseinheit, der die empfangenen Benachrichtigungen zugeführt werden und die bei mehreren gleichzeitig vorliegenden Benachrichtigungen diese Benachrichtigungen basierend auf einer jeweils zugeordneten Kategorie gegeneinander priorisiert; und
- einen Ausgang zum Bereitstellen der priorisierten Benachrichtigungen für eine Wiedergabe entsprechend ihrer jeweiligen Priorität.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm für ein Ausführungsbeispiel des erfindungsgemäßen Verfahrens;
- Fig. 2: zeigt ein Beispiel für einen zeitlichen Verlauf einer kategoriebasierten Verdrängung und Aufschaltung von Benachrichtigungen; und
- Fig. 3: zeigt schematisch ein Blockschaltbild einer erfindungsgemäßen Vorrichtung in Verbindung mit weiteren Komponenten eines Fahrzeugs.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

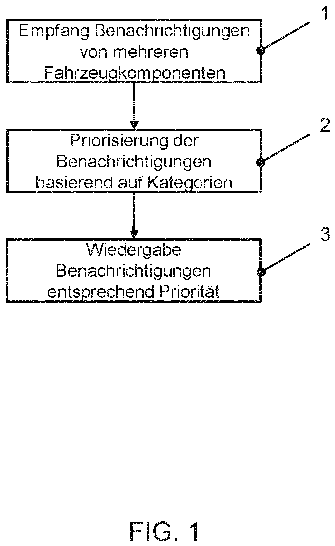

Figur 1 zeigt schematisch ein Ausführungsbeispiel für das erfindungsgemäße Verfahren zur Wiedergabe von Benachrichtigungen in einem Fahrzeug. Gemäß Verfahrensschritt 1 werden Benachrichtigungen von mehreren Komponenten des Fahrzeugs empfangen. Unter einer Benachrichtigung werden hierbei beliebige Meldungen verstanden, die sich an den Fahrer oder auch andere Insassen des Fahrzeugs richten. Diese können beispielsweise Warnungen über eine akute oder in Kürze bevorstehende Gefahrensituation sein oder auf technische Probleme des Fahrzeugs bezogen sein, das aktuelle Fahrzeugumfeld oder die Verkehrssituation auf der zukünftigen Route des Fahrzeugs betreffen. Ebenso können auch Hinweise über erforderliche Servicemaßnahmen, eine Änderung der vorgeschlagenen Fahrtroute oder Vorschläge zur Fahrweise des Fahrers ausgegeben werden. Auch können Hinweise zu einer Kommunikation mit Personen außerhalb des Fahrzeugs erfolgen. Ebenso sind Angaben zu aktuellen Einstellungen, beispielsweise der Klimaeinrichtung des Fahrzeugs, möglich. Diese Benachrichtigungen werden von verschiedenen Software- und/oder Hardwarekomponenten des Fahrzeugs generiert und von einer weiteren, zentralen Software- bzw. Hardwarekomponente des Fahrzeugs empfangen und verarbeitet. Hierfür muss die zentrale Fahrzeugkomponente verfügbar sein, noch bevor von einer der anderen Fahrzeugkomponenten Benachrichtigungen ausgelöst werden können.

Die Benachrichtigungen sind durch eine Zuordnung zu einer von mehreren Kategorien kategorisiert. Die Kategorisierung der Benachrichtigungen kann hierbei bereits in den jeweiligen Fahrzeugkomponenten erfolgen, die den durch sie generierten Benachrichtigungen jeweils eine Kategorie zuordnet und diese dann mit der Benachrichtigung versendet. Ebenso kann die Kategorisierung aber auch in der zentralen Fahrzeugkomponente erfolgen, die bei Empfang der Benachrichtigungen diese dann jeweils eine Kategorie zuordnet. Unabhängig davon, an welcher Stelle die Kategorisierung erfolgt, ist es jedoch wichtig, dass jede Benachrichtigung kategorisiert wird und die zentrale Fahrzeugkomponente alle möglichen Kategorien kennt und verarbeiten kann.

Hierbei wird auf Kategorien für verschiedene Arten von Benachrichtigungen zurückgegriffen, die durch ein Benachrichtigungs-Gremium festgelegt worden sind. So können in offenen oder proprietären Standards und Regularien für verschiedene Arten von Benachrichtigungen Kategorien definiert werden, beispielsweise basierend auf rechtlichen Vorgaben, FuSi Klassifizierungen im Rahmen der Norm ISO 26262:2011, einem international gültigen Standard im Automotivebereich für elektrische und elektronische Systeme von Straßenfahrzeugen, oder auch basierend auf anderen inhaltlichen Abgrenzungen.

Dieses ermöglicht in einem Verfahrensschritt 2 die Wiedergabe bei mehreren gleichzeitig auftretenden Benachrichtigungen zu regulieren, in dem die Benachrichtigungen basierend auf ihrer jeweiligen Kategorie gegeneinander priorisiert werden.

Eine beispielhafte Kategorisierung von Benachrichtigungen in Kategorien A bis K, die zur Priorisierung genutzt werden kann, ist wie folgt:

| | |
|---|---|
| Kategorie A | Unmittelbar bevorstehende Gefahrensituation mit sofortiger Handlungsaufforderung bzw. Fahreingriff mit Eingriffszeit < 2 s |
| Kategorie B | Massive Fahrzeugeinschränkung mit einer zeitkritischen Handlungsaufforderung, die eine Eingriffszeit > 2 s erlaubt |
| Kategorie C | Mittelbar bevorstehende Gefahrensituation, welche im Umkreis oder auf der geplanten Route auftritt |
| Kategorie D | Systemeinschränkung, welche es erfordert, Servicemaßnahmen vorzunehmen |
| Kategorie E | Kommunikation mit dem Fahrer durch Personen außerhalb des Fahrzeugs initiiert |
| Kategorie F | Anpassung der Fahrweise oder Routenführung ist erforderlich |
| Kategorie G | Aktuell bestehende Systemeinschränkung, welche nicht die Sicherheit, sondern nur den Komfort während der Fahrt verringert und sich nicht selbstständig heilt |
| Kategorie H | Aktuell bestehende Systemeinschränkung, welche nicht die Sicherheit, sondern nur den Komfort während der Fährt verringert und sich selbstständig heilt |
| Kategorie I | System wird zukünftig eine Einschränkung erfahren, bzw. das System könnte verbessert werden |
| Kategorie J | Prädiktive Meldungen von Anwendungen, ohne direkten Nutzerinput, welche die Fahraufgabe komfortabler gestalten |
| Kategorie K | Globale Statusmeldungen, Erfolgsmeldungen und Rückmeldungen von Anwendungen ohne direkten Nutzerinput |

Es kann aber ebenso auch eine auf anderen Kriterien beruhende oder auch gröbere oder feinere Abstufung der Kategorien vorgesehen werden.

Die priorisierten Benachrichtigungen werden daraufhin in Verfahrensschritt 3 basierend auf ihrer jeweiligen Priorität wiedergegeben, so dass Wiedergabekonflikte oder eine Informationsüberflutung durch die gleichzeitige Wiedergabe von zu vielen Informationen vermieden werden.

Die Wiedergabe der Benachrichtigungen im Fahrzeug an den Fahrer oder andere Insassen, und gegebenenfalls auch eine Interaktion, kann grundsätzlich durch verschiedenartige Mensch-Maschine-Schnittstellen (abgekürzt HMI von englisch "Human Machine Interface") erfolgen. Als Wiedergabekanäle sind hierbei visuelle Kanäle mittels einer oder mehrerer Displays besonders geeignet, da diese eine Vielzahl unterschiedlicher Modalitäten, wie beispielsweise Benachrichtigungen als Popup, in Kombination mit Symbolen oder als eine Animation darzustellen, ermöglichen. Insbesondere sicherheitskritische Benachrichtigungen werden bevorzugt als PopUp wiedergegeben, die durch ihr Aufspringen unmittelbar die Aufmerksamkeit erwecken und die Dringlichkeit hervorheben. Wird auf dem Display bereits eine Benachrichtigung angezeigt, so kann diese hierbei durch eine Benachrichtigung einer höheren Priorität überlagert, verdrängt oder mit dieser ausgetauscht werden.

Ebenso können aber auch durch akustische Kanäle, insbesondere dann durch eine Sprachausgabe über einen oder mehrere Lautsprecher, Benachrichtigungen ausgegeben werden. Unterstützend können auch Warntöne ausgegeben werden, Anzeigen durch LED-Lichterketten oder ein haptisches Feedback erfolgen. Weiterhin kann auch eine Einfärbung einer Fahrzeugscheibe oder eines sogenannten Anzeigebedienteils, in dem sich ein Display und Bedienelemente für das Display befinden, vorgesehen werden.

Ferner kann für die Wiedergabe ein Touchscreen-Display vorgesehen sein, sodass durch Berührung einer grafischen Benutzeroberfläche am Ort einer dargestellten Benachrichtigung eine gegebenenfalls zugeordnete Funktion ausgeführt werden kann. Ebenso können auf diese Weise weiterführende Informationen zu der Benachrichtigung, wie detaillierte textuelle Informationen, Bilder und Videoclips, aufgerufen und ausgegeben werden. Eine Darstellung auf einem zentralen Touchscreen-Display ermöglicht hierbei im Bereich der Mittelkonsole eine besonders komfortable Bedienung durch den Nutzer. Ebenso kann eine solche Interaktion aber, beispielsweise bei einer Darstellung auf dem Kombiinstrument oder einem Head-up-Display des Fahrzeugs, auch durch eine Spracheingabe oder mechanische Bedientasten oder -knöpfe, die der Anzeige auf dem Display zugeordnet sind, erfolgen.

Eine Zuordnung der Wiedergabekanäle für die Ausgabe der Benachrichtigungen kann durch die zentrale Fahrzeugkomponente erfolgen. Hierbei liegt in der zentralen Fahrzeugkomponente eine Information über sämtliche, grundsätzlich möglichen Wiedergabekanäle für eine Wiedergabe von Benachrichtigungen vor. Ebenso kennt die zentrale Fahrzeugkomponente den Zustand der jeweiligen Wiedergabekanäle, d.h. ob die dafür erforderlichen Komponenten im Fahrzeug überhaupt verbaut sind und aktiv oder gegebenenfalls defekt sind. Für Displays wird zusätzlich vermerkt, ob sich diese im Blickfeld des Fahrers befinden, um so sicherzustellen, dass Benachrichtigungen, die sich an den Fahrer richten, auch von diesem wahrgenommen werden können.

Den verschiedenen Komponenten zur Wiedergabe können hierbei ebenfalls Prioritäten zugeordnet sein. So können beispielsweise Displays in der Sichtachse eine Priorität 1 haben, eine Lichtleiste oder Audiowiedergabekanäle die Priorität 2, andere Bauteile, in denen sich ein Display befinden, die Priorität 3. Die zentrale Fahrzeugkomponente kann dann basierend auf der Kategorie einer Benachrichtigung entscheiden, auf welchen der Komponenten eine Wiedergabe erfolgen soll.

Weiterhin verwaltet die zentrale Fahrzeugkomponente die Benachrichtigungen auf allen Wiedergabekanälen, gegebenenfalls auch gleichzeitig auf mehreren Wiedergabekanälen, um beispielsweise eine Anzeige der Benachrichtigungen auf den Wiedergabekanälen zu synchronisieren, ein Verschieben einer Benachrichtigung von einem Wiedergabekanal auf einen anderen Wiedergabekanal oder ein Wiederaufschalten einer Benachrichtigung zu einem späteren Zeitpunkt zu ermöglichen.

Insbesondere wenn Benachrichtigungen mit der höchsten Priorität vorliegen, so werden diese ohne Verzögerungen wiedergegeben. Da diese Benachrichtigungen eine unmittelbare Gefahrensituation widerspiegeln können, kann hierbei eine parallele Ausgabe über mehrere Wiedergabekanäle erfolgen, beispielsweise als blinkende Anzeige auf einem Display in Kombination mit einer Sprachausgabe der Benachrichtigung und einem Vibrieren des Lenkrads. Liegen hierbei zeitgleich Benachrichtigungen mit einer niedrigeren Priorität vor und werden diese durch die Benachrichtigungen mit höherer Priorität von einer Wiedergabe verdrängt, so werden die verdrängten Benachrichtigungen zwischengespeichert und zu einem späteren Zeitpunkt wiedergegeben. Ebenso kann aber auch eine gleichzeitige Anzeige mehrerer Benachrichtigungen mit unterschiedlichen Kategorien auf unterschiedlichen Wiedergabekanälen erfolgen.

Bei gleichzeitigem Vorliegen von mehreren Benachrichtigungen der gleichen Kategorie kann die zeitlich aktuellste Benachrichtigung zuerst wiedergegeben werden. Die Anzeige dieser Benachrichtigung erfolgt dann für eine Mindestanzeigedauer, bevor diese durch eine Anzeige von einer Benachrichtigung der gleichen Kategorie ersetzt wird.

Diese Mindestanzeigedauer gilt ebenso auch gleichzeitigem Vorliegen von mehreren Benachrichtigungen unterschiedlicher Kategorien bzw. Prioritäten. Je nach Umsetzung des HMIs und den rechtlichen Rahmenbedingungen kann dies dazu führen, dass eine Benachrichtigung dann unter Umständen auf einem anderen Display, als entsprechend der Kategorie bzw. Priorität zugeordnet, angezeigt wird. Dieses tritt dann auf, wenn auf dem ursprünglich zugeordneten Display eine Benachrichtigung noch weiterhin angezeigt werden muss, da die Mindestanzeigedauer der dargestellten Benachrichtigung noch nicht abgelaufen ist.

Ebenso kann aber auch vorgesehen werden, innerhalb einer Kategorie eine Abstufung vorzusehen, in dem einer Benachrichtigung eine von mehreren möglichen Werten innerhalb eines Wertebereichs zugeordnet wird. Bei zwei eingehenden Benachrichtigungen der gleichen Kategorie wird dann eine der Benachrichtigungen basierend auf dem zugeordneten Wert priorisiert und zuerst wiedergegeben. Eine solche Abstufung innerhalb einer Kategorie kann ebenfalls durch ein bereits oben erwähntes Benachrichtigungs-Gremium festgelegt werden.

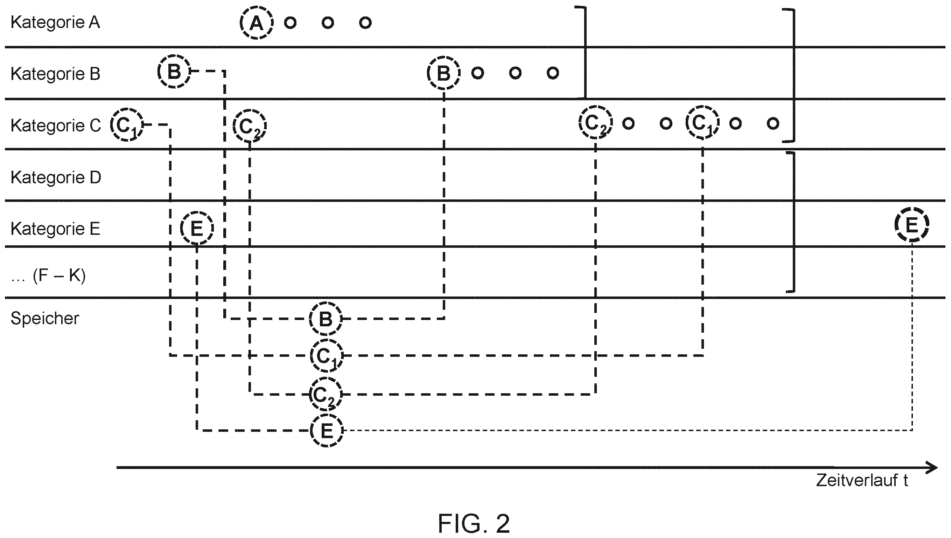

Figur 2 zeigt ein Beispiel für einen zeitlichen Verlauf einer kategoriebasierten Verdrängung und Aufschaltung von Benachrichtigungen. Die Kategorien A bis K entsprechen hierbei den oben exemplarisch angegebenen Kategorien, übersichtshalber werden in dem dargestellten Beispiel jedoch nur Benachrichtigungen der Kategorien A bis E verwendet. Benachrichtigungen der höchsten Kategorien A bis C stellen hierbei unmittelbare oder mittelbare Gefahrenmeldungen bzw. massive Fahrzeugeinschränkungen dar und werden daher sofort angezeigt. Werden Benachrichtigungen einer Kategorie mit niedrigerer Priorität von einer Benachrichtigung mit einer Kategorie höherer Priorität verdrängt, so werden diese zwischengespeichert und, soweit sie dann noch relevant sind, nach einer Wartezeit zu einem späteren Zeitpunkt wiedergegeben.

Die Benachrichtigungen werden hierbei in dem Speicher nach ihrer Priorität einsortiert sowie entsprechend wiedergegeben. Benachrichtigungen mit Kategorien niedrigerer Priorität, wie beispielsweise Nachrichten von einem Nachrichtenportal, werden im Anschluss im Speicher gelöscht. Insbesondere bei sicherheitskritischen und fahrzeugrelevanten Benachrichtigungen kann dagegen auch eine dauerhafte Speicherung mit der Möglichkeit für den Nutzer oder auch dritte, diese wieder abrufen zu können, vorgesehen werden.

In dem dargestellten Beispiel gehört die als erstes eintreffende Benachrichtigung der Kategorie C an. Diese Benachrichtigung wird sofort angezeigt. Kurz darauf trifft eine Benachrichtigung der Kategorie B ein. Da diese eine höhere Priorität als die vorherige Benachrichtigung hat, wird nun die Benachrichtigung der Kategorie B angezeigt und die Benachrichtigung der Kategorie C im Speicher abgelegt und nicht weiter dargestellt. Die daraufhin eintreffende Mitteilung der Kategorie E wird unmittelbar im Speicher abgelegt und entsprechend ihrer geringeren Priorität unter der Benachrichtigung der Kategorie C einsortiert. Die Wiedergabe der Benachrichtigung der Kategorie B wird dann durch das Eintreffen einer Benachrichtigung der Kategorie A, die aufgrund ihrer höchsten Priorität sofort dargestellt wird, unterbrochen. Die Benachrichtigung der Kategorie B wird dann, da ihre Mindestanzeigedauer noch nicht abgelaufen war, ebenfalls im Speicher abgelegt, ebenso wie die zeitgleich mit der Benachrichtigung der Kategorie A eingetroffene weitere Benachrichtigung der Kategorie C. Die Benachrichtigung der Kategorie A wird nun so lange angezeigt bis ihre Mindestanzeigedauer abgelaufen ist oder die unmittelbare Gefährdung nicht mehr vorliegt. Im Anschluss wird dann die Benachrichtigung der Kategorie B aus dem Speicher abgerufen und nun ebenfalls bis zum Ablauf der Mindestanzeigedauer wiedergegeben. Daraufhin erfolgt die Wiedergabe der beiden Benachrichtigungen der Kategorie C, wobei zunächst die zeitlich aktuellere Meldung angezeigt wird. Nachdem auch die Mindestanzeigedauer für diese Benachrichtigungen jeweils abgelaufen sind, wird schließlich die vorher noch nicht zur Anzeige gebrachte Benachrichtigung der Kategorie E aus dem Speicher abgefragt und wiedergegeben.

In dem dargestellten Beispiel sind die zwischengespeicherten Benachrichtigungen jeweils noch relevant bzw. aktuell und werden daher wieder zur Wiedergabe aufgeschaltet. Ob eine Benachrichtigung noch aktuell ist, wird hierbei durch die Komponente verwaltet, welche diese Benachrichtigung erzeugt hat. Die zentrale Fahrzeugkomponente fragt diesen Status dann vor dem Aufschalten ab.

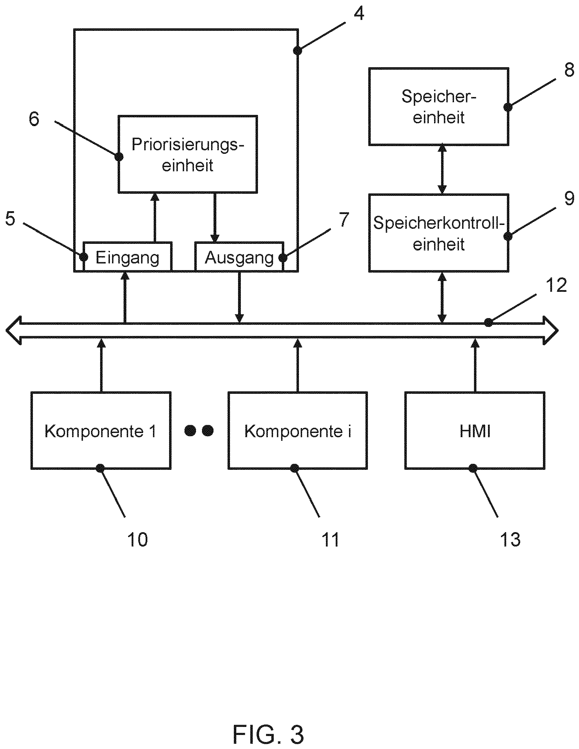

Figur 3 zeigt schematisch ein vereinfachtes Blockschaltbild einer erfindungsgemäßen Vorrichtung 4 in Verbindung mit weiteren Komponenten eines Fahrzeugs. Beispielsweise handelt es sich bei der Vorrichtung 4 um ein Steuergerät, einen Computer, einen Mikrocontroller oder ein eingebettetes System und ist mit einem Prozessor und einem Speicher versehen, in dem Instruktionen abgelegt sind, welche die Vorrichtung 4 bei Ausführung durch den Prozessor veranlassen, die Schritte gemäß einem der oben beschriebenen Verfahren auszuführen.

Die Vorrichtung 4 hat einen Eingang 5 zum Empfangen der Benachrichtigungen, die von verschiedenen Fahrzeugkomponenten 10,11 über einen Fahrzeugbus 12 an die Vorrichtung gesendet werden. Die empfangenen Benachrichtigungen werden einer Priorisierungseinheit 6 zugeführt, in der die Benachrichtigungen basierend auf einer jeweils zugeordneten Kategorie priorisiert werden und dann über einen Ausgang 7 für eine Wiedergabe entsprechend ihrer jeweiligen Priorität bereitgestellt werden. Der Eingang 5 und der Ausgang 7 können hierbei zu einer bidirektionalen Schnittstelle zusammengefasst sein.

In einer Speichereinheit 8 können Benachrichtigungen zwischengespeichert werden. Die Speichereinheit 8 kann hierbei aus einem Speicherbaustein oder aber auch mehreren voneinander getrennten Speicherbausteinen für Benachrichtigungen unterschiedlicher Kategorien bzw. Prioritäten bestehen. Die Speicherbausteine können beispielsweise als Random-Access Memory (RAM), Dynamic Random Access Memory (DRAM), EPROM oder Flash-Speicher ausgestaltet sein, wobei ggfs. durch eine ständige Stromversorgung sichergestellt wird, dass sicherheitskritische oder fahrzeugrelevante Benachrichtigungen nicht verloren gehen. In der Speichereinheit können so auch Benachrichtigungen, die einen Serviceeingriff erfordern oder dauerhaft relevant sind, solange vorgehalten werden, bis der Nutzer sie aktiv "gelesen" hat, und dann gelöscht oder auch, als "gelesen" markiert, weiter vorgehalten werden.

Weiterhin ist eine Speicherkontrolleinheit 9 vorgesehen, die den Datenfluss zwischen der Priorisierungseinheit 6 und der Speichereinheit 8 regelt und die Benachrichtigungen in dem Speicher nach ihrer Priorität einsortiert. Weiterhin kann die Speicherkontrolleinheit dafür sorgen, dass Benachrichtigungen mit Kategorien niedrigerer Priorität nach ihrer Wiedergabe im Speicher gelöscht werden

Schließlich ist eine Benutzerschnittstelle (HMI) 13 vorgesehen, mittels der die oben beschriebene Informationsausgabe an den Nutzer des Fahrzeugs und gegebenenfalls Interaktion mit dem Nutzer erfolgt.

Die Erfindung kann in verschiedensten Kraftfahrzeugen wie Pkws, Motorrädern, Lkws, Wohnmobilen oder Bussen angewendet werden, ist aber nicht auf die Verwendung in solchen Fahrzeugen beschränkt.

### Bezugszeichenliste

- 1- 3: Verfahrensschritte
- 4: Erfindungsgemäße Vorrichtung
- 5: Eingang
- 6: Priorisierungseinheit
- 7: Ausgang
- 8: Speichereinheit
- 9: Speicherkontrolleinheit
- 10, 11: Fahrzeugkomponenten
- 12: Fahrzeugbus
- 13: Benutzerschnittstelle

## Patentansprüche

1. Verfahren zur Wiedergabe von Benachrichtigungen in einem Fahrzeug, bei dem
- Benachrichtigungen von mehreren Komponenten des Fahrzeugs empfangen (1) werden;
- bei mehreren gleichzeitig vorliegenden Benachrichtigungen diese Benachrichtigungen basierend auf einer jeweils zugeordneten Kategorie gegeneinander priorisiert (2) werden; und
- die priorisierten Benachrichtigungen entsprechend ihrer jeweiligen Priorität wiedergegeben (3) werden, wobei Benachrichtigungen mit der höchsten Priorität unmittelbar wiedergegeben werden und Benachrichtigungen mit einer niedrigeren Priorität zwischengespeichert werden und zu einem späteren Zeitpunkt wiedergegeben werden.

2. Verfahren nach Anspruch 1, wobei bei gleichzeitigem Vorliegen von mehreren Benachrichtigungen der gleichen Kategorie die zeitlich aktuellste Meldung zuerst wiedergegeben wird.

3. Verfahren nach Anspruch 2, wobei Benachrichtigungen einer Kategorie jeweils einer von mehreren möglichen Werten innerhalb eines Wertebereichs zugeordnet wird und bei gleichzeitigem Vorliegen von mehreren Benachrichtigungen der gleichen Kategorie die Benachrichtigung mit einem maximalen oder minimalen Wert priorisiert und zuerst wiedergegeben wird.

4. Verfahren nach einem der vorhergehenden Ansprüche, wobei für die Wiedergabe der Benachrichtigungen mehrere Wiedergabekanäle vorgesehen sind und die mehreren Wiedergabekanäle ein oder mehrere visuelle Kanäle mittels einer oder mehrerer Displays und/oder LED-Lichterketten, ein oder mehrere akustische Kanäle mittels einer oder mehrerer Lautsprecher und/oder ein oder mehrere haptische Kanäle mittels einer oder mehrerer Aktoren umfassen.

5. Verfahren nach Anspruch 4, wobei eine Benachrichtigung mit einer hohen Priorität auf mehreren Wiedergabekanäle gleichzeitig ausgegeben werden kann.

6. Verfahren nach Anspruch 4 oder 5, wobei mehrere unterschiedliche Benachrichtigungen gleichzeitig auf mehreren unterschiedlichen Wiedergabekanälen ausgegeben werden.

7. Verfahren nach einem der vorhergehenden Ansprüche, wobei eine Benachrichtigung einer Kategorie für eine Mindestanzeigedauer angezeigt wird, bevor diese durch eine Anzeige von einer weiteren Benachrichtigung ersetzt wird.

8. Verfahren nach einem der vorhergehenden Ansprüche, wobei eine auf einem Display angezeigte Benachrichtigung einer Kategorie durch eine Anzeige von einer Benachrichtigung einer höheren Kategorie überlagert oder verdrängt wird.

9. Verfahren nach einem der vorhergehenden Ansprüche, wobei die Benachrichtigungen von den mehreren Komponenten des Fahrzeugs an ein zentrales Steuergerät oder eine zentrale Softwarekomponente des Fahrzeugs gesendet werden und das zentrale Steuergerät oder die zentrale Softwarekomponente die empfangenen Benachrichtigungen priorisiert.

10. Computerprogramm mit Instruktionen, die bei Ausführung durch einen Computer den Computer zur Ausführung der Schritte eines Verfahrens gemäß einem der Ansprüche 1 bis 9 veranlassen.

11. Vorrichtung zur Wiedergabe von Benachrichtigungen in einem Fahrzeug, mit
- einem Eingang (5) zum Empfangen von Benachrichtigungen von mehreren Komponenten des Fahrzeugs;
- einer Priorisierungseinheit (6), der die empfangenen Benachrichtigungen zugeführt werden und die bei mehreren gleichzeitig vorliegenden Benachrichtigungen diese Benachrichtigungen basierend auf einer jeweils zugeordneten Kategorie gegeneinander priorisiert, wobei Benachrichtigungen mit der höchsten Priorität unmittelbar wiedergegeben werden und Benachrichtigungen mit einer niedrigeren Priorität zwischengespeichert werden und zu einem späteren Zeitpunkt wiedergegeben werden;
- einer Speichereinheit (8) zum Zwischenspeichern von Benachrichtigungen mit einer niedrigeren Priorität;
- einer Speicherkontrolleinheit (9), die den Datenfluss zwischen der Priorisierungseinheit (6) und der Speichereinheit (8) regelt; und
einem Ausgang (7) zum Bereitstellen der priorisierten Benachrichtigungen für eine Wiedergabe entsprechend ihrer jeweiligen Priorität.

## Claims

1. Method for playback of messages in a vehicle, in which
- messages are received (1) from a plurality of components of the vehicle;
- in the case where a plurality of messages are present simultaneously, these messages are prioritized (2) relative to one another on the basis of a respective allocated category; and
- the prioritized messages are played back (3) according to their respective priority, wherein messages with the highest priority are played back immediately, and messages with a lower priority are temporarily stored and are played back at a later time.

2. Method according to Claim 1, wherein, in the case where a plurality of messages of the same category are present simultaneously, the most recent notification is played back first.

3. Method according to Claim 2, wherein messages of a category are each allocated one of a plurality of possible values within a value range and, in the case where a plurality of messages of the same category are present simultaneously, the message with a maximum or minimum value is prioritized and played back first.

4. Method according to one of the preceding claims, wherein a plurality of playback channels are provided for playback of the messages, and the plurality of playback channels include one or more visual channels by means of one or more displays and/or LED light chains, one or more acoustic channels by means of one or more loudspeakers, and/or one or more haptic channels by means of one or more actuators.

5. Method according to Claim 4, wherein a message with a high priority can be output on a plurality of playback channels simultaneously.

6. Method according to Claim 4 or 5, wherein a plurality of different messages are output simultaneously on a plurality of different playback channels.

7. Method according to one of the preceding claims, wherein a message of a category is displayed for a minimum display time before it is replaced by a display of another message.

8. Method according to one of the preceding claims, wherein a message of a category displayed on a display is overlaid or displaced by a display of a message of a higher category.

9. Method according to one of the preceding claims, wherein the messages are sent by the plurality of components of the vehicle to a central control device or a central software component of the vehicle, and the central control device or the central software component prioritizes the received messages.

10. Computer program having instructions which, when carried out by a computer, cause the computer to carry out the steps of a method according to one of Claims 1 to 9.

11. Apparatus for playback of messages in a vehicle, having
- an input (5) for receiving messages from a plurality of components of the vehicle;
- a prioritization unit (6) to which the received messages are fed and which, in the case where a plurality of messages are present simultaneously, prioritizes these messages relative to one another on the basis of a respective allocated category, wherein messages with the highest priority are played back immediately, and messages with a lower priority are temporarily stored and are played back at a later time,
- a storage unit (8) for temporarily storing messages with a lower priority;
- a storage control unit (9) which controls the data flow between the prioritization unit (6) and the storage unit (8); and
- an output (7) for providing the prioritized messages for playback according to their respective priority.

## Revendications

1. Procédé de diffusion de notifications dans un véhicule, procédé dans lequel
- des notifications sont reçues de plusieurs composants du véhicule (1) ;
- si plusieurs notifications sont présentes en même temps, ces notifications sont priorisées les unes par rapport aux autres sur la base d'une catégorie associée (2) ; et
- les notifications priorisées sont diffusées selon leur priorité respective (3), les notifications qui ont la priorité la plus élevée étant diffusées immédiatement et les notifications qui ont une priorité moindre étant placées dans une mémoire intermédiaire et diffusées ultérieurement.

2. Procédé selon la revendication 1, si plusieurs notifications de la même catégorie sont présentes en même temps, la notification la plus récente étant diffusée en premier.

3. Procédé selon la revendication 2, les notifications d'une catégorie étant chacune associées à une parmi plusieurs valeurs possibles dans une gamme de valeurs et si plusieurs notifications de la même catégorie sont présentes en même temps, la notification qui a une valeur maximale ou minimale étant priorisée et diffusée en premier.

4. Procédé selon l'une des revendications précédentes, plusieurs canaux de diffusion étant prévus pour la diffusion des notifications et les plusieurs canaux de diffusion comprenant un ou plusieurs canaux visuels au moyen d'un ou plusieurs afficheurs et/ou guirlandes lumineuses à LED, un ou plusieurs canaux acoustiques au moyen d'un ou plusieurs haut-parleurs et/ou un ou plusieurs canaux haptiques au moyen d'un ou plusieurs actionneurs.

5. Procédé selon la revendication 4, une notification de haute priorité pouvant être délivrées sur plusieurs canaux de diffusion simultanément.

6. Procédé selon la revendication 4 ou 5, plusieurs notifications différentes étant délivrées simultanément sur plusieurs canaux de diffusion différents.

7. Procédé selon l'une des revendications précédentes, une notification d'une catégorie étant affichée pendant une durée d'affichage minimale avant d'être remplacée par l'affichage d'une autre notification.

8. Procédé selon l'une des revendications précédentes, une notification d'une catégorie, affichée sur un afficheur, étant superposée ou déplacée par un affichage d'une notification d'une catégorie supérieure.

9. Procédé selon l'une des revendications précédentes, les notifications étant envoyées depuis les plusieurs composants du véhicule à une unité de commande centrale ou un composant logiciel central du véhicule et l'unité de commande central ou le composant logiciel central priorisant les notifications reçues.

10. Programme informatique comportant des instructions qui, lorsqu'elles sont exécutées par un ordinateur, amènent celui-ci à exécuter les étapes d'un procédé selon l'une des revendications 1 à 9.

11. Dispositif de diffusion de notifications dans un véhicule, ledit dispositif comprenant
- une entrée (5) destinée à recevoir des notifications de plusieurs composants du véhicule ;
- une unité de priorisation (6) à laquelle les notifications reçues sont amenées et qui, si plusieurs notifications sont présentes en même temps, priorise ces notifications les unes par rapport aux autres sur la base d'une catégorie associée, les notifications qui ont la priorité la plus élevée étant diffusées immédiatement et les notifications qui ont une priorité moindre étant placées dans une mémoire intermédiaire et diffusées ultérieurement ;
- une unité de mémorisation (8) destinée à mémoriser temporairement des notifications qui ont une priorité moindre ;
- une unité de commande de mémoire (9) qui régule le flux de données entre l'unité de priorisation (6) et l'unité de mémorisation (8) ; et
- une sortie (7) destinée à fournir les notifications priorisées pour la diffusion en fonction de leur priorité respective.
